# EUROPÄISCHE PATENTSCHRIFT

(11) **EP 3 335 808 B1**
(45) Veröffentlichungstag und Bekanntmachung des Hinweises auf die Patenterteilung: **12.01.2022**
(21) Anmeldenummer: 17001985.5
(22) Anmeldetag: 06.12.2017
(51) Int. Cl.: B07B 7/083, B01D 45/14

(54) **SICHTRAD FÜR EINEN ZENTRIFUGALKRAFT-WINDSICHTER**
CLASSIFYING ROTOR FOR CENTRIFUGAL AIR SEPARATOR
ROUE DE SÉPARATION POUR UN SÉPARATEUR À AIR À FORCE CENTRIFUGE

(30) Priorität: 16.12.2016 DE 102016015051
(43) Veröffentlichungstag der Anmeldung: 20.06.2018
(73) Patentinhaber: HOSOKAWA ALPINE Aktiengesellschaft, 86199 Augsburg (DE)
(72) Erfinder: Knauer, Dominik, 86163 Augsburg (DE); Kraus, Karl Herman, 86156 Augsburg (DE); Skirde, Horst, 86199 Augsburg (DE)

(56) Entgegenhaltungen:
- WO-A1-94/12290
- DE-A1- 3 425 101
- DE-A1- 19 840 344
- DE-C- 291 871
- DE-U1- 29 505 311
- DE-U1-202008 012 076
- US-B2- 8 231 007

## Beschreibung

Die Erfindung betrifft ein Sichtrad für einen Zentrifugalkraft-Windsichter welches von der Sichtluft entgegen seiner Schleuderrichtung von außen nach innen durchströmt wird, welches kranzförmig angeordnete Sichtradschaufeln aufweist, die zwischen einer die Sichtradnabe tragenden ringförmigen Nabenscheibe und einer ringförmigen Deckscheibe angeordnet sind, wobei Strömungskanäle zwischen den Sichtradschaufeln durch die in einem Abstand zueinander und in Richtung der Drehachse verlaufenden Flächen der Sichtradschaufeln gebildet werden, sowie den Strömungsverlauf beeinflussende Erweiterungen an den Sichtradschaufeln innerhalb der Strömungskanäle angeordnet sind.

Windsichter dienen dazu ein in einem Fluid dispergiertes Sichtgut in eine Fein- und eine Grobfraktion zu trennen. Die Trennwirkung eines Sichtrades der vorausgesetzten Art beruht darauf, dass die Schleppkraft des Fluids und die Fliehkraft in den Strömungskanälen zwischen den Sichtradschaufeln des sogenannten Abweiserades in einander entgegengesetzten Richtungen auf die einzelnen Partikel des Feststoffes einwirken. Bei kleinen Partikeln überwiegt die Schleppkraft, so dass sie vom Fluid mitgenommen und als Feingut ausgetragen werden. Bei großen Partikeln überwiegt die Fliehkraft, so dass sie entgegen der Fluidströmung aus dem Abweiserad geschleudert werden. Die Partikelgröße, für die Fliehkraft und Schleppkraft im Gleichgewicht sind, die also mit gleicher Wahrscheinlichkeit in das Feingut oder das Grobgut gelangt, wird als Trennkorngröße oder Trenngrenze bezeichnet.

Die Anforderungen an die Sichtung von Schüttgütern werden immer höher. Es werden immer größere Mengen an Schüttgut gesichtet. Auch an das Ergebnis der Sichtung werden immer höhere Anforderungen gestellt. Die Sichtung soll nicht nur wirtschaftlich sein, auch die Trennschärfe und das Ausbringen sollen hoch sein.

Ein Problem bei der Sichtung abrasiver Produkte ist der Verschleiß an den Sichträdern, speziell an den Sichtradschaufeln.

### Stand der Technik

Bei sehr kleinen Sichträdern ist der Austausch des kompletten Sichtrades noch vertretbar, es kommen Sichträder zum Einsatz, die einteilig aufgebaut sind und die komplett aus einem Sinterwerkstoff, wie Keramik, bestehen, wie in der DE 41 40 656 A1 offenbart.

Bei größeren Sichträdern kommen austauschbare Sichtradschaufeln zum Einsatz. Es ist dadurch eine kostengünstige Instandsetzung der verschlissenen Sichträder möglich, da nicht das ganze Sichtrad ausgetauscht werden muss, sondern nur die verschlissenen Sichterradschaufeln ersetzt werden. Die Sichtradschaufeln bestehen bevorzugt aus verschleißfesten keramischen Werkstoffen. Diese Art Sichträder ist in der DE 196 13 902 A1 offenbart.

Um eine möglichst scharfe Trennung in Feingut und Grobgut zu erzielen, ist es erforderlich, dass in allen Strömungskanälen zwischen den Sichtradschaufeln eine gleichmäßige Durchströmung mit gleicher mittlerer Radialgeschwindigkeit des Fluids vorliegt. Ist dieses nicht realisierbar, kommen Sichträder mit Einbauten zum Einsatz wie sie in der DE 198 40 344 A1 offenbart sind. Die Einbauten sind innerhalb der Strömungskanäle zwischen zwei Sichtradschaufeln angeordnet. Die Einbauten verhindern unerwünschte Wirbelbildung innerhalb der Strömungskanäle, auch dann, wenn eine ungerichtete Strömung am Außenumfang des Sichtrades vorliegt. Aufgrund des aufwendigen Aufbaus dieser Sichträder und der gewünschten Drehzahlen bei denen diese Sichträder betrieben werden, wurden diese bisher nicht verschleißgeschützt ausgeführt.

Die WO 94/12290 A1 offenbart ein Sichtrad, dass aus einem Rotorelement aufgebaut ist, welches eine Vielzahl von Öffnungen, für die mit zu klassierendem Material angereicherte Sichtluft, ausgerüstet ist. Diese Öffnungen sind annähernd equidimensional geformt, d.h. die Öffnungen wiesen eine geringes Längen- zu Breitenverhältnis auf.

Die US 8,231,007 B2 offenbart ebenfalls ein Sichtrad, dieses besteht aus einer unteren und einer oberen Ebene, die jeweils Sichtradschaufeln aus verschleißfestem Material aufnehmen. Die untere und die obere Ebene des Sichtrades werden durch einen Zwischenring getrennt. In jeder Ebene werden die Sichtradschaufeln von einem Ring mit rechteckigen Ausnehmungen und einem Ring mit nach außen offenen Schlitzen gehalten, sodass sie austauschbar ausgeführt sind. Die Sichtradschaufeln werden über eine ringförmige Halterung, die außen um den Zwischenring greift, in den nach außen offenen Schlitzen fixiert.

### Aufgabe

Der Erfindung liegt daher die Aufgabe zugrunde, eine Lösung zu schaffen, die es ermöglicht Sichträder mit Einbauten zur Strömungsbeeinflussung zu schaffen, die verschleißarm ausgeführt sind.

### Lösung

Bei einem Sichtrad der eingangs beschriebenen Art wird die Aufgabe erfindungsgemäß durch das Kennzeichen des Hauptanspruchs gelöst. Das erfindungsgemäße Sichtrad weist zwischen der ringförmigen Nabenscheibe und der ringförmigen Deckscheibe mindestens einen Versteifungsring auf, welcher umfänglich gleichmäßig beanstandete Haken aufweist, die die Sichtradschaufeln an den Erweiterungen halten, wobei die Haken des Versteifungsrings und die Erweiterungen der Sichtradschaufeln formschlüssig ineinandergreifen, sodass die radial außenliegende Kante der Sichtradschaufeln frei von dem Versteifungsring ist.

### Beschreibung der Erfindung

Das Sichtrad umfasst drei Komponenten. Dieses sind der Sichtradgrundkörper die äußeren Sichtradschaufeln und die ringförmige Deckscheibe. Der Sichtradgrundkörper weist eine ringförmige Nabenscheibe mit einer Sichtradnabe, inneren Sichtradschaufeln und eine ringförmige Stirnscheibe auf. Die Nabenscheibe nimmt in ihrem mittleren Bereich, im Anschluss an die Sichternabe, die radial und kranzförmig angeordneten inneren Sichtradschaufeln auf. Auf der der Nabenscheibe entgegengesetzten Seite der inneren Sichtradschaufeln ist die ringförmige Stirnscheibe des Grundkörpers angeordnet. Die Bauteile des Grundkörpers sind unlösbar, z.B. durch Löten oder Schweißen, miteinander verbunden. Die inneren Sichtradschaufeln weisen über die axiale Sichtradhöhe unterschiedliche radiale Schaufelbreiten auf.

Die Nabenscheibe und die Deckscheibe weisen an ihrem äußeren Bereich kranzförmig angeordnete verlaufende Schlitze auf, in denen die äußeren Sichtradschaufeln eingesetzt und gehalten werden. Die Deckscheibe ist lösbar, z.B. durch Schrauben, mit dem Sichtradgrundkörper verbunden. Durch diesen Aufbau sind die äußeren Sichtradschaufeln steckbar ausgeführt. Die äußeren Sichtradschaufeln können auch radial schräg verlaufen, so dass die inneren und äußeren Sichtradschaufeln einen unterschiedlichen Winkel zur radialen Richtung des Sichtrades aufweisen. Die inneren und äußeren Sichtradschaufeln können alternativ auch den gleichen Winkel zur radialen Richtung des Sichtrades aufweisen.

Zur Stabilisierung und Versteifung des Sichtrads sind ein oder mehrere Versteifungsringe vorgesehen. Sie sind über die Höhe des Sichtrades verteilt angeordnet. In Höhe des Versteifungsrings weisen die inneren Sichtradschaufeln Ausnehmungen auf, in die der Versteifungsring eingesetzt wird. Die inneren Sichtradschaufeln und der Versteifungsring sind unlösbar miteinander verbunden. An seinem äußeren Umfang weist der Versteifungsring gleichmäßig verteilte Haken auf. Die Haken entsprechen der Anzahl der Sichtradschaufeln. Die Haken haben die Aufgabe die äußeren Sichtradschaufeln zu halten und die wirkenden Kräfte aufzufangen. Damit die Haken die äußeren Sichtradschaufeln halten können, weisen die äußeren Sichtradschaufeln entsprechende Erweiterungen im radial innen liegenden Bereich der Schaufelbreite auf. Die Erweiterungen erstrecken sich über die gesamte Höhe der äußeren Sichtradschaufeln. Die Haken des Versteifungsrings und die Erweiterungen der Sichtradschaufeln greifen formschlüssig ineinander.

Durch diesen Aufbau ist die radial außen liegende Kante der Sichtradschaufel frei von dem Versteifungsring, sodass die verschleißgeschützt ausgeführten Sichtradschaufeln, nicht aber der Versteifungsring dem Verschleiß unterliegt.

Der Versteifungsring ist im Vergleich zur Naben- und Deckscheibe sowie den äußeren Sichtradschaufelkanten radial nach innen versetzt, um den Verschleiß an der radial äußeren Kante des Versteifungsrings durch den dominierenden Prall zu reduzieren.

Die äußeren Sichtradschaufeln sind starkem Verscheiß ausgesetzt, weshalb sie verschleißgeschützt ausgeführt werden.

Die äußeren Sichtradschaufeln können ganz aus einem Verschleißschutzwerkstoff bestehen. Dann sind sie aus Verschleißschutzwerkstoffen wie Keramik, Hartmetall, Metalllegierungen oder Kunststoff gefertigt.

Die äußeren Sichtradschaufeln können teilweise aus einem Verschleißschutzwerkstoff bestehen. In diesem Fall wird der Sichtradschaufelgrundkörper mit einer Platte oder mehreren nebeneinander angeordneten Plättchen aus einem Verschleißschutzwerkstoff versehen. Der Verschleißschutz wird auf der Seite der Sichtradschaufel aufgebracht, die in Drehrichtung des Sichtrades vorne liegt. Diese Verschleißschutzplatten erstrecken sich von der Vorderkante der Sichtradschaufel bis zur Erweiterung im radial innen liegenden Bereich der Schaufelbreite über die gesamte Höhe der Schaufel. Die Erweiterung selber weist keinen Verschleißschutz auf. Der Verschleißschutz kann auch die radial vordere schmale Kante der Sichtradschaufeln umfassen. Folgende Werkstoffe kommen u.a. für die Verschleißplatten in Frage: Keramiken, Kunststoffe oder Hartmetalle. Der Verschleißschutz in Form von Platten oder Plättchen, kann durch kleben, löten oder schrauben auf den Schaufelgrundkörper aufgebracht werden.

Alternativ kann die Oberfläche der Sichtradschaufeln mittels Oberflächenhärtung wie z.B. Borieren oder Nitrieren gehärtet werden. Eine weitere Methode ist das aufbauende Verfahren des Auftragschweißens, speziell das Laserauftragsschweißen, von verschleißarmen Werkstoffen auf die Sichtradschaufeln. Hier werden Materialien wie Hartmetall, Hartstoffe mit Binder wie z.B. Wolfram- oder Chromcarbid verwendet. Außerdem können thermische Spritzverfahren angewendet werden.

Die Erweiterung der äußeren Sichtradschaufeln im radial innen liegenden Bereich der Schaufelbreite kann unterschiedlichste Formen annehmen wie z.B. die Form eines Dreiecks, eines Quadrates, eines Rechtecks oder Polygons. Sie kann auch stufenförmig ausgeführt sein.

Durch diesen Aufbau des Sichtrades sind die äußeren Sichtradschaufeln steckbar ausgeführt, und sie können so in Bezug auf das Verschleißmaterial an das zu sichtende Produkt angepasst werden. Dieser Aufbau ermöglicht auch einen Tausch der Sichtradschaufeln. Der Tausch der Sichtradschaufeln kann ohne Ausbau des Sichtrades aus dem Sichter erfolgen, indem nur die Deckscheibe von Sichtrad gelöst wird und die äußeren Sichtradschaufeln herausgezogen und ausgetauscht werden.

Da das Sichtrad aus den drei Komponenten Grundkörper mit Kreisscheibe und mit inneren Sichtradschaufeln, Deckscheibe sowie äußere Sichtradschaufeln besteht, ist ein Austausch des kompletten Rades nicht erforderlich, die Verschleißteile werden bei Bedarf einzeln ausgetauscht.

Durch diesen Aufbau ist auch die Kombination von verschleißenden und verschleißarmen Materialien wie z.B. Stähle mit Keramiken, Hartmetalle und Kunststoff realisierbar.

In der Regel reicht es aus, die äußeren Sichtradschaufeln einseitig verschleißgeschützt auszuführen. Der Versteifungsring braucht nicht verschleißgeschützt ausgeführt werden, da er nach innen versetzt ausgeführt ist und so wenig Verschleiß unterliegt.

Ist der Verschleiß des Sichtrades durch das zu sichtende Material trotzdem zu hoch, können auch der Grundkörper, die Deckscheibe und der Versteifungsring verschleißgeschützt ausgeführt werden. Der Verschleißschutz kann den einzelnen Komponenten des Sichtrades und deren Verschleißbeanspruchung angepasst werden. Bei wenig abrasiven Sichtgut können die Sichtradschaufeln auch aus Stahl bestehen. Im Falle, dass Verschleiß auf der in Rotationsrichtung abgewandten Seite der Sichtradschaufel Verschleiß auftritt, kann auch diese verschleißgeschützt ausgeführt werden.

Dieser Aufbau der Sichtradschaufeln ermöglicht auch die Wahl von Materialien wie CFK, GFK, Polymere und andere als Werkstoff für den Sichtradschaufelgrundkörper. Alternativ kann der Schaufelgrundkörper auch aus einem Gusswerkstoff gefertigt werden. Weiterhin können Additive Verfahren (additive manufacturing) zum Einsatz kommen.

Die Erweiterungen an den äußeren Sichtradschaufeln stellen Einbauten dar, wie sie in der DE 198 40 344 A1 offenbart sind. Sie sollen eine unerwünschte Wirbelbildung innerhalb der Strömungskanäle zwischen den Sichtradschaufeln verhindern, auch dann wenn eine ungerichtete Strömung am Außenumfang des Sichtrades vorliegt.

Die Geometrie der äußeren Sichtradschaufeln mit der Erweiterung über die gesamte Schaufelhöhe im radial innen liegenden Bereich der Schaufelbreite trägt zur Versteifung der Sichtradschaufeln bei, damit diese den Fliehkräften bei hohen Sichtraddrehzahlen stand halten und die Fliehkräfte im Zusammenwirken mit dem Versteifungsring aufnimmt. Außerdem verhindert der Versteifungsring ein Durchbiegen und eine Bewegung der äußeren Sichtradschaufeln in radialer Richtung.

Die Erweiterungen haben somit drei Funktionen:
- Strömungsbeeinflussung der Sichtluft zwischen den Sichtradschaufeln,
- Versteifung der Sichtradschaufel
- Angriffspunkt für die Haken des Versteifungsrings zum Halten der Sichtradschaufeln.

Da die Deckscheibe mit dem Sichtradgrundkörper verschraubt wird, ist durch den Einsatz unterschiedlicher Schrauben eine auftretende Unwucht ausgleichbar.

### Figurenbeschreibung

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielhaft- ein bevorzugtes Ausführungsbeispiel der Erfindung dargestellt ist. In der Zeichnung zeigt:
- Fig. 1: eine Querschnittsansicht eines erfindungsgemäßen Sichtrades
- Fig. 2: ein Ausschnitt des Versteifungsrings
- Fig. 3: Querschnitte der äußeren Sichtradschaufel

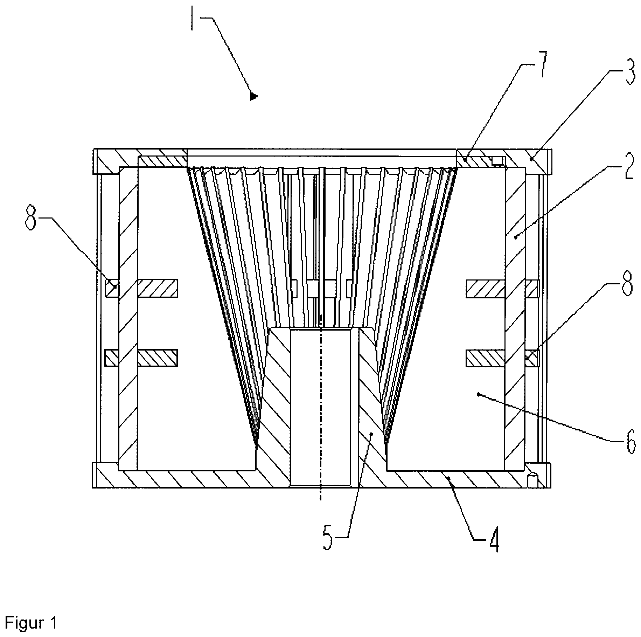

Die Figur 1 zeigt das erfindungsgemäße Sichtrad 1 für einen Windsichter. Es besteht aus einem Sichtradgrundkörper, äußeren Sichtradschaufeln 2 und einer ringförmigen Deckscheibe 3. Der Sichtradgrundkörper besteht aus der ringförmigen Nabenscheibe 4, der Sichtradnabe 5, den inneren Sichtradschaufeln 6 und der ringförmigen Stirnscheibe 7 des Sichtradgrundkörpers. Diese Teile sind unlösbar miteinander verbunden.

Die inneren Sichtradschaufeln 6 sind gleichmäßig beabstandet und radial um die Sichtradnabe 5 angeordnet und in Schlitzen in der Nabenscheibe 4 gehalten. An der der Nabenscheibe 4 gegenüberliegenden Seite werden die inneren Sichtradschaufeln 6 mit einer Stirnscheibe 7 fixiert. Die inneren Sichtradschaufeln 6 sind trapezförmig ausgeführt. An die inneren Sichtradschaufeln 6 schließen sich in radial äußerer Richtung die äußeren Sichtradschaufeln 2 an. Sie weisen die gleiche Anzahl auf wie die inneren Sichtradschaufeln 6, sie sind ebenfalls gleichmäßig beabstandet. Sie verlaufen radial schräg, so dass die inneren und äußeren Sichtradschaufeln einen unterschiedlichen Winkel zur radialen Richtung des Sichtrades aufweisen. Die äußeren Sichtradschaufeln 2 werden in Schlitzen bzw. Führungen in der Nabenscheibe 4 und der Deckscheibe 3 geführt und gehalten. Die Deckscheibe wird mit dem Grundkörper verschraubt.

In diesem Ausführungsbeispiel weist das Sichtrad 1 zwei Versteifungsringe 8 auf. Sie sind jeweils im gleichen Anstand von der Deck- 3 bzw. Nabenscheibe 4 angeordnet und weisen einen Abstand zueinander auf. In einer anderen nichtgezeigten Ausführungsform ist der Abstand zwischen der Deckscheibe 3, der Nabenscheibe 4 und den zwei Versteifungsringen 8 gleich. Die Versteifungsringe 8 werden in Ausnehmungen der inneren Sichtradschaufeln 6 gehalten.

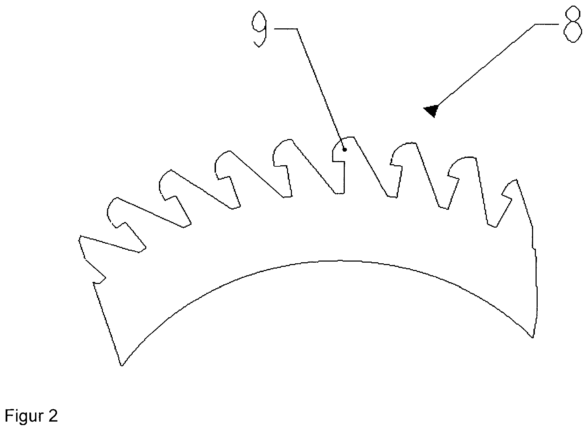

In Figur 2 ist ein Ausschnitt des Versteifungsrings 8 des Sichtrades dargestellt. Der Versteifungsring 8 weist gleichmäßig um seinen Umfang, nach radial außen, Haken 9 auf. Die Haken 9 entsprechen anzahlmäßig den Sichtradschaufeln. Die äußeren Sichtradschaufeln 2 weisen Erweiterungen 10 auf. Diese Erweiterungen 10 sind am radial inneren Bereich der Sichtradschaufeln über die Höhe der Schaufeln angeordnet. Die Haken 9 des Versteifungsringes und die Erweiterung 10 der äußeren Sichtradschaufeln 2 greifen formschlüssig ineinander, so werden die äußeren Sichtradschaufeln 2 von den Haken 9 des Versteifungsrings 8 gehalten. Der Versteifungsring 8 weist einen Durchmesser auf, der kleiner ist als der Durchmesser der Deckscheibe 3 und Nabenscheibe 4. Der Durchmesser der von den Haken 9 beschrieben wird, ist kleiner als der Durchmesser, der von den radial äußeren Kanten der Sichtradschaufeln 2 beschrieben wird. So ist der Versteifungsring 8 außerhalb des Bereichs der dominierenden Prallbeanspruchung und unterliegt geringerem Verschleiß.

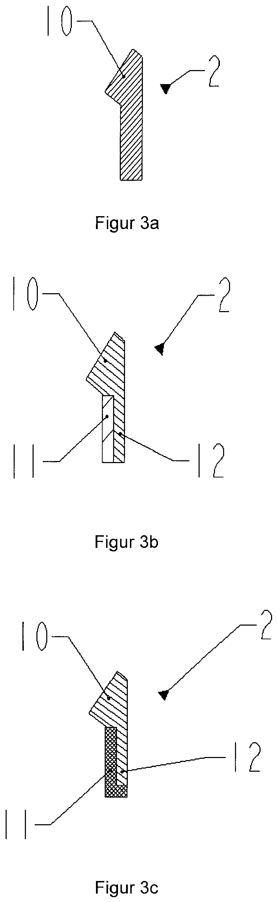

In der Figur 3 a ist eine äußere Sichtradschaufel 2 im Querschnitt dargestellt. Die Sichtradschaufel 2 hat einen nahezu rechteckigen Querschnitt und weist an einem Ende eine Erweiterung 10 auf. Diese Erweiterung befindet sich im eingebauten Zustand der Sichtradschaufel am radial inneren Bereich der Schaufel. Diese im Querschnitt polygonförmige Erweiterung 10 erstreckt sich über die gesamte Höhe der Sichtradschaufel 2. Diese Sichtradschaufeln 2 bestehen komplett aus einem Material wie z.B. einem verschleißfesten Material (Keramik oder Hartmetall). Da die äußeren Sichtradschaufeln 2 schräg angeordnet sind, weist die radial innere Kante der Sichtradschaufel 2 eine Schräge auf, um formschlüssig an die innere Sichtradschaufel 6 zu stoßen.

In Figur 3 b ist eine äußere Sichtradschaufel 2 im Querschnitt abgebildet, die die gleiche Form hat wie die äußere Sichtradschaufel 2 aus Figur 3 a, sie besteht aber nicht komplett aus einem verschleißfesten Material. Die Sichtradschaufel besteht aus dem Sichtradschaufelgrundkörper und dem Verschleißschutz. Der Verschleißschutz ist hier durch eine Verschleißplatte 11 aus verschleißfestem Material realisiert. Die Verschleißplatte 11 reicht über die gesamte Höhe der äußeren Sichtradschaufel und von der Kante bis zur Erweiterung 10. Der Bereich der Erweiterung 10 bleibt frei, damit der Haken 9 des Versteifungsrings 8 formschlüssig in die Erweiterung 10 greifen kann. Alternativ kann der obere und untere Bereich der Sichtradeschaufel der in den Schlitzen der Deck und Nabenscheibe aufgenommen wird, frei von der Verschleißschutzplatte bleiben. Die Verschleißschutzplatte ist auf die Sichtradschaufel geklebt. In einer anderen Ausführungsform ist die Verschleißplatte aufgelötet oder aufgeschweißt. Der Verschleißschutz kann auch aus mehreren kleinen nebeneinander angeordneten Plättchen bestehen.

In Figur 3 c ist eine weitere Ausgestaltung des Verschleißschutzes der äußeren Sichtradschaufeln 2 dargestellt. Hier ist zusätzlich zu der Fläche 11, die radial außen liegende Kante der äußeren Sichtradschaufel mit einem verschleißfesten Material versehen.

**Bezugszeichen**

| | |
|---|---|
| Sichtrad | 1 |
| äußere Sichtradschaufeln | 2 |
| Deckscheibe | 3 |
| Nabenscheibe | 4 |
| Sichtradnabe | 5 |
| innere Sichtradschaufeln | 6 |
| Stirnscheibe | 7 |
| Versteifungsring | 8 |
| Haken | 9 |
| Erweiterung | 10 |
| Verschleißplatte | 11 |
| Sichtradschaufelgrundkörper | 12 |

## Patentansprüche

1. Sichtrad (1) für einen Zentrifugalkraft-Windsichter, welches im Betrieb von der Sichtluft entgegen seiner Schleuderrichtung von außen nach innen durchströmt wird, welches kranzförmig angeordnete Sichtradschaufeln aufweist, die zwischen einer die Sichtradnabe (5) tragenden ringförmigen Nabenscheibe (4) und einer ringförmigen Deckscheibe (3) angeordnet sind, wobei Strömungskanäle zwischen den Sichtradschaufeln durch die in einem Abstand zueinander und in Richtung der Drehachse verlaufenden Flächen der Sichtradschaufeln gebildet werden, sowie den Strömungsverlauf beeinflussende Erweiterungen (10) an den Sichtradschaufeln innerhalb der Strömungskanäle angeordnet sind **dadurch gekennzeichnet, dass** zwischen der Nabenscheibe (4) und der Deckscheibe (3) mindestens ein Versteifungsring (8) angeordnet ist, welcher umfänglich gleichmäßig beabstandete Haken (9) aufweist, die die Sichtradschaufeln an den Erweiterungen (10) halten,
wobei die Haken (9) des Versteifungsrings (8) und die Erweiterungen (10) der Sichtradschaufeln formschlüssig ineinandergreifen, so dass die radial außen liegende Kante der Sichtradschaufeln (2) frei von dem Versteifungsring (8) ist.

2. Sichtrad (1) nach Anspruch 1 **dadurch gekennzeichnet, dass** die Sichtradschaufeln aus inneren Sichtradschaufeln (6) und äußeren, die Erweiterung (10) aufweisenden, Sichtradschaufeln (2) bestehen.

3. Sichtrad (1) nach Anspruch
**dadurch gekennzeichnet, dass** die radial
äußeren Sichtradschaufeln (2) im radial innen liegenden Bereich der Breite der Sichtradschaufeln Erweiterungen (10) aufweisen, die sich über die Höhe der Sichtradschaufel erstrecken.

4. Sichtrad (1) nach Ansprüche 2 bis 3 **dadurch gekennzeichnet, dass** die inneren Sichtradschaufeln (6) und die äußeren Sichtradschaufeln (2) unterschiedliche Winkel zur radialen Richtung des Sichtrades (1) aufweisen.

5. Sichtrad (1) nach einem oder mehreren der vorangegangenen Ansprüche 2 bis 4 **dadurch gekennzeichnet, dass** die äußeren Sichtradschaufeln (2) komplett oder teilweise verschleißgeschützt ausgeführt sind.

6. Sichtrad (1) nach einem oder mehreren der vorangegangenen Ansprüche 2 bis 5 **dadurch gekennzeichnet, dass** die äußeren Sichtradschaufeln (2) mit Verschleißschutzplatten (11) ausgerüstet sind und an der in Rotationsrichtung vorne gelegenen Seite der Sichtradschaufel angebracht sind, die sich über die Höhe und Breite der Schaufel bis an die Erweiterung (10) erstrecken, wobei die Erweiterung (10) frei von den Verschleißschutzplatten (11) ist.

7. Sichtrad (1) nach Anspruch 6 **dadurch gekennzeichnet, dass** die Verschleißschutzplatte (11) der äußeren Sichtradschaufeln (2) die radial außenliegende Kante mit umfasst.

8. Sichtrad (1) nach einem oder mehreren der vorangegangenen Ansprüche 2 bis 7 **dadurch gekennzeichnet, dass** die äußeren Sichtradschaufeln (2) steckbar in Führungen zwischen der Nabenscheibe (4) des Sichtradgrundkörpers (12), der Deckscheibe (3) und den Haken (9) des Versteifungsringes (8) angeordnet sind.

9. Sichtrad (1) nach einem oder mehreren der vorangegangenen Ansprüche 2 bis 8 **dadurch gekennzeichnet, dass** ein Verschleißschutz der äußeren Sichtradschaufeln (2) aus Keramik, Kunststoff, Hartstoff, Hartmetall besteht

10. Sichtrad (1) nach einem oder mehreren der vorangegangenen Ansprüche
**dadurch gekennzeichnet, dass** ein Verschleißschutz der äußeren Sichtradschaufeln (2) durch Oberflächenhärtung, thermische Spritzverfahren oder durch Auftragsschweißen erreicht wird.

11. Sichtrad (1) nach einem oder mehreren der vorangegangenen Ansprüche **dadurch gekennzeichnet, dass** die Erweiterungen (10) der Sichtradschaufeln folgende Funktionen erfüllen:
- Strömungsbeeinflussung in den Strömungskanälen
- Versteifung der Sichtradschaufeln
- Angriffspunkt für die Haken (9) des Versteifungsrings (8) zum Halten der Sichtradschaufeln

12. Sichtrad (1) nach einem oder mehreren der vorangegangenen Ansprüche
**dadurch gekennzeichnet, dass** der Versteifungsring (8) derart ausgebildet ist, dass er über die Haken (9) und
die Erweiterungen (10) der äußeren Sichtradschaufeln (2) die bei der Rotation des Sichtrades auftretenden Fliehkräfte aufnimmt.

13. Sichtrad (1) nach Anspruch 1 **dadurch gekennzeichnet, dass** der Versteifungsring (8) im Durchmesser kleiner ist als der Durchmesser der Naben-(4) und Deckscheibe (3).

## Claims

1. Classifying wheel (1) for a centrifugal-force air classifier, where the flow pattern of the classifying air in operation
is contrary to its centrifugal direction, namely centripetal, and which is equipped with classifying wheel vanes which are arranged much like a crown between an annular hub plate (4) which supports the classifying wheel hub (5) and a ringshaped cover plate (3), whereby flow channels are formed between the classifying wheel vanes by the faces of the classifying wheel vanes tilted at an angle to the rotational axis and spaced at a distance to each other, as well as the extensions (10) fitted to the classifying wheel vanes within the flow channels which influence the flow pattern, **characterised in that** between the hub plate (4) and the cover plate (3), at least one reinforcing ring (8) is present which has hooks (9) spaced uniformly around its periphery which connect the classifying wheel vanes to the extensions (10),
whereby the hooks (9) of the reinforcing ring (8) and the extensions (10) of the classifying wheel vanes interlock positively so that the radial outside edge of the classifying wheel vanes (2) is not in contact with the reinforcing ring (8).

2. Classifying wheel (1) in accordance with Claim 1, **characterised in that** the classifying wheel vanes comprise inside classifying wheel vanes (6) and outside classifying wheel vanes (2) which have an extension (10).

3. Classifying wheel (1) in accordance with Claim 2, **characterised in that** the radial outside classifying wheel vanes (2) have extensions (10) in the radial inside zone of the width of the classifying wheel vanes which extend over the height of the classifying wheel vane.

4. Classifying wheel (1) in accordance with Claim 2 and 3, **characterised in that** the inside classifying wheel vanes (6) and the outside classifying wheel vanes (2) are positioned at different angles to the radial direction of the classifying wheel (1).

5. Classifying wheel (1) in accordance with one or more of the preceding Claims 2 to 4, **characterised in that** the outside classifying wheel vanes (2) are completely or partially protected against wear.

6. Classifying wheel (1) in accordance with one or more of the preceding Claims 2 to 5, **characterised in that** the outside classifying wheel vanes (2) are equipped with wear-protection plates (11) which are fitted in rotational direction to the front side of the classifying wheel vanes and which extend over the height and width of the vane to the extension (10), whereby the extension (10) itself has no wear-protection plates (11).

7. Classifying wheel (1) in accordance with Claim 6, **characterised in that** the wear-protection plate (11) of the outside classifying wheel vanes (2) also covers the radial outside edge.

8. Classifying wheel (1) in accordance with one or more of the preceding Claims 2 to 7, **characterised in that** the outside classifying wheel vanes (2) in plug-in design are inserted into guideways between the hub plate (4) of the classifying wheel subassembly (12), the cover plate (3) and the hooks (9) of the reinforcing ring (8).

9. Classifying wheel (1) in accordance with one or more of the preceding Claims 2 to 8, **characterised in that** the
wear protection of the outside classifying wheel vanes (2) consists of ceramic, plastic, hard material or tungsten carbide.

10. Classifying wheel (1) in accordance with one or more of the preceding claims, **characterised in that** the
wear protection of the outside classifying wheel vanes (2) is accomplished by means of surface hardening, thermal spray process or by build-up welding.

11. Classifying wheel (1) in accordance with one or more of the preceding claims, **characterised in that** the extensions (10) of the classifying wheel vanes have the following functions:
- Flow control in the flow channels
- Reinforcment of the classifying wheel vanes
- Contact point for the hooks (9) of the reinforcing ring (8) to support the classifying wheel vanes

12. Classifying wheel (1) in accordance with one or more of the preceding claims, **characterised in that** the reinforcing ring (8) is designed such that it absorbs the centrifugal forces generated by the rotation of the classifying wheel by way of the hooks (9) and
the extensions (10) of the outside classifying wheel vanes (2).

13. Classifying wheel (1) in accordance with Claim 1, **characterised in that** the diameter of the reinforcing ring (8) is smaller than the diameter of the hub plate (4) and cover plate (3).

## Revendications

1. Roue de séparation (1) pour un séparateur à air à force centrifuge parcourue en fonctionnement par l'air de sélection, contre son sens centrifuge, de l'extérieur vers l'intérieur, est équipée d'aubes de sélection disposées en couronne et placées entre un moyeu annulaire (4) qui porte le moyeu (5) de la roue de séparation et une contreplaque annulaire (3), formant ainsi des canaux d'écoulement entre les aubes de la roue de séparation grâce aux surfaces de ces dernières disposées à une certaine distance les unes par rapport aux autres et s'étendant en direction de l'axe de rotation, ainsi que d'élargissements (10) influant sur l'écoulement et étant disposés sur les aubes de la roue de séparation à l'intérieur des canaux d'écoulement, **caractérisée par le fait qu'au** moins un frettage (8) se trouve entre le moyeu annulaire (4) et la contreplaque (3) et présentant des crochets (9) disposés à une distance uniforme sur la circonférence qui maintiennent les aubes de la roue de séparation aux élargissements (10), les crochets (9) du frettage (8) et les élargissements (10) des aubes de la roue de séparation s'emboîtent mécaniquement de manière à ce que l'arête située radialement à l'extérieur des aubes de la roue de séparation (2) n'ait pas de contact avec le frettage (8).

2. Roue de séparation (1) suivant la revendication 1, **caractérisée par le fait que** les aubes de la roue de séparation comprennent des aubes intérieures (6) et des aubes extérieures (2) qui présentent des élargissements (10).

3. Roue de séparation (1) suivant la revendication 2, **caractérisée par le fait que** les aubes de la roue de séparation situées radialement à l'extérieur présentent des élargissements (10) sur la largeur des aubes de la roue de séparation dans la zone située radialement à l'intérieur, les élargissements étendent sur la hauteur de l'aube de la roue de séparation.

4. Roue de séparation (1) suivant les revendications 2 à 3, **caractérisée par le fait que** les aubes de la roue de séparation intérieures (6) et les aubes de la roue de séparation extérieures (2) présentent des angles différents par rapport à l'axe radial de la roue de séparation (1).

5. Roue de séparation (1) suivant une ou plusieurs des revendications précédentes 2 à 4, **caractérisée par le fait que** les aubes de la roue de séparation extérieures (2) sont complètement ou partiellement protégées de l'usure.

6. Roue de séparation (1) suivant une ou plusieurs des revendications précédentes 2 à 5, **caractérisée par le fait que** les aubes de la roue de séparation extérieures (2) sont équipées de plaques anti-usure (11) se trouvant sur la face avant des aubes de la roue de séparation en direction de l'axe de rotation et s'étendant sur la hauteur et la largeur de l'aube jusqu'à l'élargissement (10), mais l'élargissement (10) n'a pas de contact avec les plaques anti-usure (11).

7. Roue de séparation (1) suivant la revendication 6, **caractérisée par le fait que** la plaque anti-usure (11) des aubes de la roue de séparation extérieures (2) comprend également l'arête située radialement à l'extérieur.

8. Roue de séparation (1) suivant une ou plusieurs des revendications précédentes 2 à 7, **caractérisée par le fait que** les aubes de la roue de séparation extérieures (2) sont enfichées dans les guidages situés entre le moyeu annulaire (4) du corps de base de la roue de séparation (12), la contreplaque (3) et les crochets (9) du frettage (8).

9. Roue de séparation (1) suivant une ou plusieurs des revendications précédentes 2 à 8, **caractérisée par le fait que** si une protection anti-usure des aubes de la roue de séparation extérieures (2) est présente, elle est réalisée en céramique, matière plastique, matière dure ou carbure.

10. Roue de séparation (1) suivant une ou plusieurs des revendications précédentes, **caractérisée par le fait qu'**une protection anti-usure des aubes de la roue de séparation extérieures (2) s'obtient par le durcissement de surface, les procédés de projection thermique ou par la soudure de rechargement.

11. Roue de séparation (1) suivant une ou plusieurs des revendications précédentes, **caractérisée par le fait que** les élargissements (10) des aubes de la roue de séparation remplissent les fonctions suivantes :
- influence sur l'écoulement dans les canaux d'écoulement
- raidissement des aubes de la roue de séparation
- point d'engagement pour les crochets (9) du frettage (8) pour maintenir les aubes de la roue de séparation.

12. Roue de séparation (1) suivant une ou plusieurs des revendications précédentes, **caractérisée par le fait que** le frettage (8) est conçu de manière à absorber les forces centrifuges se produisant lors de la rotation de la roue de séparation par les crochets (9) et les élargissements (10) des aubes de la roue de séparation extérieures (2).

13. Roue de séparation (1) suivant la revendication 1, **caractérisée par le fait que** le diamètre du frettage (8) est inférieur à celui du moyeu annulaire (4) et celui de la contreplaque (3).
